# EUROPEAN PATENT SPECIFICATION

(11) **EP 3 960 500 B1**
(45) Date of publication and mention of the grant of the patent: **04.10.2023**
(21) Application number: 21194221.4
(22) Date of filing: 01.09.2021
(51) Int. Cl.: B60C 11/00, B29C 48/18, B29D 30/60, B29D 30/52

(54) **TIRE WITH ASYMMETRICAL TREAD WITH REDUCED SHOULDER HEAT GENERATION**
REIFEN MIT ASYMMETRISCHER LAUFFLÄCHE MIT REDUZIERTER SCHULTERWÄRMEERZEUGUNG
PNEU À BANDE DE ROULEMENT ASYMÉTRIQUE ET À GÉNÉRATION DE CHALEUR RÉDUITE À L'ÉPAULEMENT

(30) Priority: 01.09.2020 US 202063073262 P; 23.06.2021 US 202117355280
(43) Date of publication of application: 02.03.2022
(73) Proprietor: The Goodyear Tire & Rubber Company, Akron, OH 44316 (US)
(72) Inventor: PHILLIPSON, Joshua Aaron, Brecksville, 44141 (US); DYRLUND, Christopher David, Canton, 44705 (US); DELANEY, Duane Thomas, North Canton, 44720 (US); ROGENSKI, Elizabeth Amelia, Atwater, 44201 (US); SKURICH, Michael Stefan, Canton, 44718 (US); KAES, Christian, L-9184 Schrondweiler (LU)
(74) Representative: Kutsch, Bernd

(56) References cited:
- EP-A1- 3 653 360
- DE-A1-102014 223 160
- US-A1- 2009 320 985
- US-A1- 2015 090 381
- US-A1- 2018 141 296
- US-A1- 2020 198 274
- US-A1- 2020 198 401
- US-A1- 2020 198 414

## Description

### Field of the Invention

The invention relates in general to tire manufacturing, and more particularly to a tire having a tire tread and a method of forming said tread.

### Background of the Invention

Tire manufacturers have progressed to more complicated designs due to an advance in technology as well as a highly competitive industrial environment. In particular, tire designers seek to use multiple rubber compounds in a tire component such as the tread in order to meet customer demands. Using multiple rubber compounds per tire component can result in a huge number of compounds needed to be on hand for the various tire lines of the manufacturer. For cost and efficiency reasons, tire manufacturers seek to limit the number of compounds available, due to the extensive costs associated with each compound. Each compound typically requires the use of a banbury mixer, which involves expensive capital expenditures. Furthermore, Banbury mixers have difficulty mixing up tough or stiff rubber compounds. The compounds generated from the banbury mixers are typically shipped to the tire building plants, thus requiring additional costs for transportation. The shelf life of the compounds is not finite, and if not used within a certain time period, is scrapped.

Thus, it is desired to have an improved method and apparatus which provides independent flow of two or more compounds from a single application head. More particularly, it is desired to be able to make a custom tire tread or tire component using only two tire compounds, which can be used to simulate multiple compounds having a variety of properties. More particularly, it is desired to provide an asymmetric tire tread that has reduced heat generation in the outside shoulder.

US 2015/090381 A1, US 2020/198274 A1, US 2020/198414 A1 and EP 3 653 360 A1 each describe a tire having a tread formed from a dual layer strip having a first layer formed of a first compound and a second layer formed from a second compound, the dual layer strip having a strip ratio of % first compound to % second compound in a range of from 20 to 50 % of the first compound to 50 to 80 % of the second compound.

US 2018/141 296 A1 and US 2009/320 985 A1 each describe a tire having a tread formed from a dual layer strip formed of a first compound and a second layer.

### Summary of the Invention

The invention relates to a tire in accordance with claim 1.

Dependent claims refer to preferred embodiments of the invention.

In one aspect, a tire having a tread is disclosed wherein the tread has a first shoulder region on an axial first side of the tread and a second shoulder region on the axial opposite side of the tread, wherein each shoulder region is formed from a dual layer strip having a first layer formed of a first compound, and a second layer formed of a different second compound, wherein the dual layer strip has a strip ratio of % first compound to % second compound, wherein first shoulder region has a strip ratio in a range of from 70 to 95% of the first compound to a range of from 5 to 30% of the second compound. The first shoulder region is the axially outside shoulder region of the tire when the tire is mounted on a vehicle in accordance with the tire's specification and the second shoulder region is the axially inside shoulder region of the tire when the tire is mounted on a vehicle in accordance with the tire's specification.

In a preferred aspect of the invention, the first shoulder region has a strip ratio of 75% to 85%, preferably 80%, of the first compound to 15 to 25 percent, preferably 20%, of the second compound.

The second shoulder region has a strip ratio in a range of from 8 to 15% of the first compound to a range of from 92 to 85% of the second compound.

In a preferred aspect of the invention, the tread consists of 30 to 50 percent, preferably 35 to 45 percent or 40%, of the first compound and of 50 to 70 percent, preferably 55 to 65 percent or 60% percent of the second compound.

In a preferred aspect of the invention, the first compound is selected for dry traction or has a higher dry traction, preferably an at least 10 percent higher dry traction, than the second compound.

In a preferred aspect of the invention, the second compound is selected for rolling resistance or has a lower rolling resistance, preferably an at least 10 percent lower rolling resistance, than the first compound.

The first compound has an at least 20% higher hysteresis than the second compound, preferably an at least 50% higher hysteresis than the second compound.

In a preferred aspect of the invention, the dual layer strips are overlapped with each other.

In a preferred aspect of the invention, the dual layer strips are applied at an angle in the range of from 0 to 60 degrees, preferably 1 to 10 degrees, with respect to the circumferential direction of the tire (100).

In a preferred aspect of the invention, one or both of the first and second shoulder regions is formed of a first layer having an at least substantially triangular cross-sectional shape and of a second layer having an at least polygonal shape.

In a preferred aspect of the invention, the first tread compound is selected for the desired tread property from the group of: rolling resistance, stiffness, electrical conductivity, thermal conductivity, wet traction, dry traction, and wear.

In a preferred aspect of the invention, the second compound is selected from the desired tread property from the group of: rolling resistance, stiffness, electrical conductivity, thermal conductivity, wet traction, dry traction, and wear.

In a preferred aspect of the invention, the first desired tread property is different than the second tread property.

### Definitions

"Aspect Ratio" means the ratio of a tire's section height to its section width.

"Axial" and "axially" means the lines or directions that are parallel to the axis of rotation of the tire.

"Circumferential" means lines or directions extending along the perimeter of the surface of the annular tread perpendicular to the axial direction; it can also refer to the direction of the sets of adjacent circular curves whose radii define the axial curvature of the tread as viewed in cross section.

"Ply" means a cord-reinforced layer of elastomer-coated, radially deployed or otherwise parallel cords.

"Radial" and "radially" mean directions radially toward or away from the axis of rotation of the tire.

"Tangent delta", or "tan delta," is a ratio of the shear loss modulus, also known as G", to the shear storage modulus (G'). These properties, namely the G', G" and tan delta, characterize the viscoelastic response of a rubber test sample to a tensile deformation at a fixed frequency and temperature, measured at 100°C.

### Brief Description of the Drawings

The invention will be described by way of example and with reference to the accompanying drawings in which:
FIG. 1 is a cross-sectional view of an asymmetrical tire tread profile formed of a 40% of a first compound A and 60% of a second compound B, wherein said tread profile is not used in a tire according to the present invention;
FIG. 2 is a cross-sectional view of an asymmetrical tire tread formed of an outside shoulder region formed of multiple layers of a dual layer strip, and an inside shoulder region formed of a dual layer strip, wherein the overall ratio of the first compound to the second compound for the entire tread is 40% A/60% B, and the strip ratio of the outside shoulder region is 80%A/20%B, and the strip ratio for the inside shoulder region is 13% A/87% B;
FIG. 3 is a cross-sectional view of a tire tread formed of a dual layer strip, wherein the overall ratio of the first compound to the second compound for the entire tread is 40% compound A/60% compound B, and the strip ratio used to form the tread has a 40%A/60%B ratio, wherein said tire tread is not used in a tire according to the present invention;
FIG. 4A is a front perspective view of a dual layer strip, wherein the dual layer strip has a bottom layer formed of 90% of a first compound and a top layer formed of 10% of a second compound;
FIG. 4B is a front perspective view of a dual layer strip having a bottom layer formed of 95% of a first compound and 5% of a second compound;
FIG. 5A is a perspective view of an apparatus for forming a dual strip, while FIG. 5B is a perspective close up cross-sectional view of a nozzle used to form the dual strip; and
FIGS. 6A-6B illustrate alternative cross-sectional views of the dual layer strip geometry.

### Detailed Description of Example Embodiments of the Invention

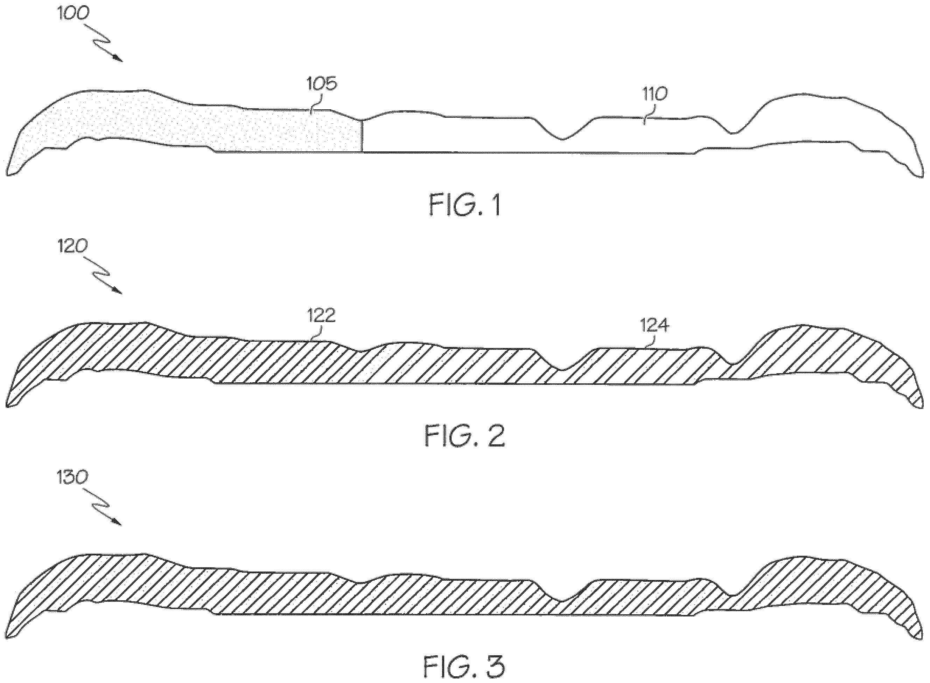

FIG. 1 illustrates a cross-sectional view of a tire tread 100, which tread is not used in a tire according to the present invention. The tire tread 100 is formed into at least two tread regions, wherein the first tread region 105 is the outside shoulder and comprises 100% of a first compound A, wherein the compound A is selected for a first desired property of the tread. In this example, compound A is selected for the property of high traction, and a tread compound having a highly loaded carbon black tread formulation is used for the desired tread characteristics. The second tread region 110 or the inside shoulder region is formed of a second compound B, wherein the second compound B is selected for a desired property of the tread. In this example, the second compound B is selected for low rolling resistance, and low hysteresis, and a highly loaded silica compound is selected, although other low rolling resistance compounds with low hysteresis known to those skilled in the art, are suitable for use. In this example, the overall ratio of the first compound A to the second compound B is 40% A/60% B, although the overall ratio may vary from 20-80% A to 80%-20% compound B.

A second embodiment of a tire tread 120 is shown in FIG. 2, wherein said tread 120 may be used in a tire according to the present invention.

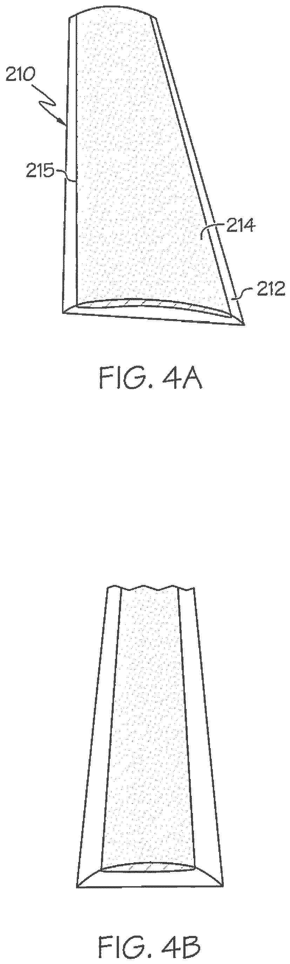

This tread is also asymmetric and has an outside shoulder region 122 and an inside shoulder region 124. The outside shoulder region 122 is formed of a dual layer strip of a first compound A and a second compound B. The dual layer strip is shown in FIG. 4A and FIG. 4B. The volume ratio of compound A to compound B can be varied, as shown in FIG. 4A and FIG. 4B. In this example, the outside shoulder region 122 is formed of a dual layer strip having a ratio of 80% compound A to 20% compound B. The dual layer strip is formed preferably by spirally winding the strip to form the tread. As shown, the dual layer strip is layed up at an angle that may vary as desired. The inside shoulder region 124 is formed of a dual layer strip, but with a different strip ratio. In this example, the ratio of compound A to compound B is 13% A/87% B. The overall ratio of the tire tread is 40% A and 60% B. Thus, the overall ratio of compound A to compound B is the same in FIG. 1 and FIG. 2. FIG. 2, however, has fine layers of compound A and Compound B in each shoulder region, but the strip ratio is different in each zone.

FIG. 3 illustrates a cross-sectional view of a tire tread 130, which tread is not used in a tire according to the present invention. In this embodiment, the entire tread is formed of a dual layer strip, wherein the dual layer strip has a strip ratio of 40% A and 60% B, providing an overall tread composition of 40% A and 60%B.

The tire tread profile of FIG. 2 and FIG. 3 result in a lower outside shoulder temperature than the tire tread profile of FIG. 1. In the tire tread profiles of FIG. 2 and FIG. 3, it has been found that the substitution of a portion of the higher hysteresis carbon black dry traction compound with a small portion of the lower hysteresis/lower rolling resistance silica compound in fine layering results in a reduced temperature of the outside shoulder and the lap count handling sensitivity while maintaining the other tire performances. The overall total proportion of the two compounds were maintained, as compared to the overall ratio of FIG. 1.

While the above described tread profiles have described an overall tread composition of 40% A and 60% B, the overall tread composition may vary as desired and are not limited to this example, as well as the strip ratio in each zone. Each zone of the tread is accomplished by the use of a dual layer strip 210 as shown in FIG. 4A that has two discrete layers of compound A and compound B, and in which the ratio of the two compounds in the strip can be varied in real time. Thus the invention is directed to a tire having a tread formed of multiple zones thus simulating the use of many compounds by varying the volume ratio of compound A to compound B.

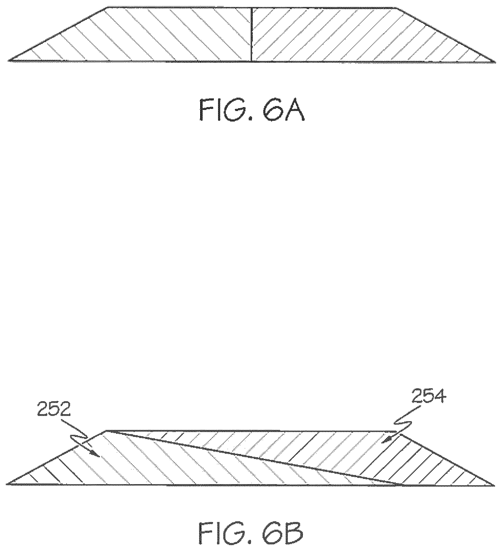

The strip of FIG. 4A and 4B illustrates one embodiment of the strip cross-sectional shape. FIG. 6A illustrates an alternative embodiment of a dual layer strip wherein the layers are side by side. FIG. 6B illustrates a duplex strip configuration having a first layer that has a first triangular cross-sectional shape 252, and a polygon shape 254 forming a second layer.

Multiple compound layering with the dual layer strip with very thin layers enable the tire component to leverage the properties of each compound while minimizing compound to compound interface durability issues because the thin cross sections of each layer are individually exposed to low stress concentration. Dynamically tuning the ratio of the two parent compounds across the component permits fine tuning of the tire zone performance contribution and delivers a previously unachievable performance.

The dual layer strip has a strip thickness in the range of 0 to 10 mm thickness, more preferably in the range of 5-8 mm, and most preferably in the range of 0-3 mm thickness. The overall width of the dual layer strip is in the range of from 10 to 25 mm. The tire tread is formed by spirally winding the dual layer strip onto a tire carcass or a tire building drum. The dual layer strips may be oriented at an angle of zero to 60 degrees. Multiple layers of the dual layer strip may be used to form the tire tread regions such as a rib.

### Dual Strip Forming Apparatus

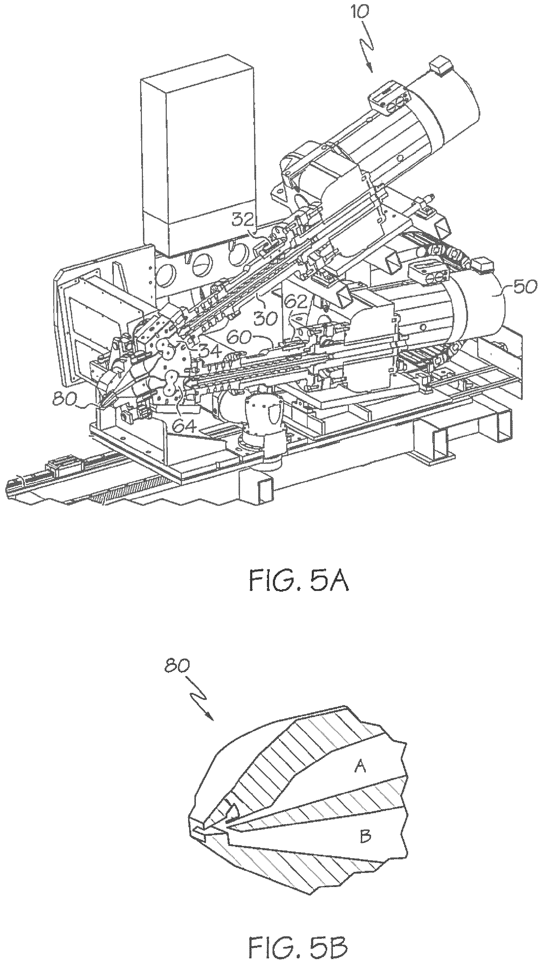

The apparatus used to form the continuous dual layer strip is shown in FIGS. 5A and 5B. The apparatus can form the coextruded strip while instantaneously varying the ratio of the first compound to the second compound. The dual strip forming apparatus 10 includes a first extruder 30 and a second extruder 60, preferably arranged vertically in close proximity. The first extruder 30 has an inlet 32 for receiving a first rubber composition A, while the second extruder 60 has an inlet 62 for receiving a second rubber composition B. Compound A is extruded by the first extruder 60 and then pumped by the first gear pump 64 into a nozzle 80, while at the same time Compound B is extruded by the second extruder 30 and then pumped by the second gear pump 34 into the nozzle 80. The volume ratio of compound A to compound B may be changed by varying the ratio of the speed of gear pump of compound A to the speed of gear pump of compound B. The dual coextruded strip forming apparatus 10 can adjust the speed ratios on the fly, and due to the small residence time of the coextrusion nozzle, the apparatus has a fast response to a change in the compound ratios. This is due to the low volume of the coextrusion zone.

The nozzle 80 forms two discrete layers 212, 214 joined together at an interface 215. The nozzle can be configured to provide different cross-sectional configurations of the strip, as shown in FIG. 6A and FIG. 6B.

## Claims

1. A tire having a tread (100) wherein the tread (100) has a first shoulder region (122) on an axial first side of the tread (100) and a second shoulder region (124) on the axial opposite side of the tread (100), wherein the first shoulder region (122) is the axially outside shoulder region of the tire (100) when the tire (100) is mounted on a vehicle in accordance with the tire's specification and wherein the second shoulder region (124) is the axially inside shoulder region of the tire (100) when the tire is mounted on a vehicle in accordance with the tire's specification, wherein each shoulder region (122, 124) is formed from a dual layer strip (210) having a first layer (212) formed of a first compound, and a second layer (214) formed of a different second compound, wherein first shoulder region (122) has a strip ratio in a range of from 70 to 95% of the first compound to a range of from 5 to 30% of the second compound, **characterised in that** the second shoulder region (124) has a strip ratio in a range of from 8 to 15% of the first compound to a range of from 92 to 85% of the second compound, and wherein the first compound has an at least 20% higher hysteresis than the second compound.

2. The tire of claim 1 wherein the first shoulder region (122) has a strip ratio of 75 to 85%, preferably 80%, of the first compound to 15 to 25%, preferably 20%, of the second compound.

3. The tire of at least one of the previous claims wherein the tread (100) consists of 30 to 50 percent, preferably 35 to 45 percent or 40%, of the first compound and of 50 to 70 percent, preferably 55 to 65 percent or 60% percent of the second compound.

4. The tire of at least one of the previous claims wherein the first compound is selected for dry traction or has a higher dry traction, preferably an at least 10 percent higher try traction, than the second compound.

5. The tire of at least one of the previous claims wherein the second compound is selected for rolling resistance or has a lower rolling resistance, preferably an at least 10 percent lower rolling resistance, than the first compound.

6. The tire of at least one of the previous claims wherein the first compound has an at least 50% higher hysteresis than the second compound.

7. The tire of at least one of the previous claims wherein the dual layer strips (210) are overlapped with each other.

8. The tire of at least one of the previous claims wherein the dual layer strips (210) are applied at an angle in the range of from 0 to 60 degrees, preferably 1 to 10 degrees, with respect to the circumferential direction of the tire (100).

9. The tire of at least one of the previous claims wherein one or both of the first and second shoulder regions (122, 124) is formed of a first layer having an at least substantially triangular cross-sectional shape (252) and of a second layer having an at least polygonal shape (254).

10. The tire of at least one of the previous claims wherein the dual layer strip (210) has a strip thickness in the range of from 0.5 to 10 mm, more preferably in the range of from 5 to 8 mm or from 0.5 to 3 mm thickness, and/or an axial width in the range of from 10 to 25 mm.

## Patentansprüche

1. Reifen, der eine Lauffläche (100) hat, wobei die Lauffläche (100) einen ersten Schulterbereich (122) auf einer axialen ersten Seite der Lauffläche (100) und einen zweiten Schulterbereich (124) auf der axial gegenüberliegenden Seite der Lauffläche (100) hat, wobei der erste Schulterbereich (122) der axial äußere Schulterbereich des Reifens (100) ist, wenn der Reifen (100) gemäß der Spezifikation des Reifens an einem Fahrzeug montiert ist, und wobei der zweite Schulterbereich (124) der axial innere Schulterbereich des Reifens (100) ist, wenn der Reifen gemäß der Spezifikation des Reifens an einem Fahrzeug montiert ist, wobei jeder Schulterbereich (122, 124) aus einem zweischichtigen Streifen (210) gebildet ist, der einen ersten, aus einer ersten Verbindung gebildeten Schicht (212) und einen zweiten, aus einer anderen zweiten Verbindung gebildeten Schicht (214) hat, wobei der erste Schulterbereich (122) ein Streifenverhältnis in einem Bereich von 70 bis 95% der ersten Verbindung zu einem Bereich von 5 bis 30% der zweiten Verbindung hat, **dadurch gekennzeichnet, dass** der zweite Schulterbereich (124) ein Streifenverhältnis in einem Bereich von 8 bis 15% der ersten Verbindung zu einem Bereich von 92 bis 85% der zweiten Verbindung hat, und wobei die erste Verbindung eine mindestens 20% höhere Hysterese als die zweite Verbindung hat.

2. Reifen nach Anspruch 1, wobei der erste Schulterbereich (122) ein Streifenverhältnis von 75 bis 85%, vorzugsweise 80%, der ersten Verbindung zu 15 bis 25%, vorzugsweise 20%, der zweiten Verbindung hat.

3. Reifen nach mindestens einem der vorhergehenden Ansprüche, wobei die Lauffläche (100) aus 30 bis 50 Prozent, vorzugsweise 35 bis 45 Prozent oder 40 Prozent der ersten Verbindung und von 50 bis 70 Prozent, vorzugsweise 55 bis 65 Prozent oder 60 Prozent der zweiten Verbindung besteht.

4. Reifen nach mindestens einem der vorhergehenden Ansprüche, wobei die erste Verbindung für trockene Traktion ausgewählt ist, oder eine höhere trockene Traktion, vorzugsweise eine mindestens 10 Prozent höhere Traktion hat als die zweite Verbindung.

5. Reifen nach mindestens einem der vorhergehenden Ansprüche, wobei die zweite Verbindung ausgewählt für den Rollwiderstand, oder einen geringeren Rollwiderstand, vorzugsweise einen um mindestens 10 Prozent geringeren Rollwiderstand hat als die erste Verbindung.

6. Reifen nach mindestens einem der vorhergehenden Ansprüche, wobei die erste Verbindung eine mindestens 50% höhere Hysterese hat als die zweite Verbindung.

7. Reifen nach mindestens einem der vorhergehenden Ansprüche, wobei die Doppelschichtstreifen (210) überlappen.

8. Reifen nach mindestens einem der vorhergehenden Ansprüche, wobei die Doppelschichtstreifen (210) unter einem Winkel von 0 bis 60 Grad, vorzugsweise 1 bis 10 Grad, in Bezug auf die Umfangsrichtung des Reifens (100) aufgebracht werden.

9. Reifen nach mindestens einem der vorhergehenden Ansprüche, wobei ein oder beide der ersten und zweiten Schulterbereiche (122, 124) aus einer ersten eine mindestens im Wesentlichen dreieckige Querschnittsform (252) umfassenden Schicht und einer zweiten eine mindestens im Wesentlichen polygonale Form (254) umfassenden Schicht gebildet sind.

10. Reifen nach mindestens einem der vorhergehenden Ansprüche, wobei der Doppelschichtstreifen (210) eine Banddicke im Bereich von 0,5 bis 10 mm, besonders bevorzugt im Bereich von 5 bis 8 mm oder von 0,5 bis 3 mm Dicke und/oder eine axiale Breite im Bereich von 10 bis 25 mm hat.

## Revendications

1. Bandage pneumatique possédant une bande de roulement (100) ; dans lequel la bande de roulement (100) possède une première zone (122) faisant office d'épaulement sur un premier côté axial de la bande de roulement (100) et une deuxième zone (124) faisant office d'épaulement sur le côté axial opposé de la bande de roulement (100) ; dans lequel la première zone (122) faisant office d'épaulement représente la zone du bandage pneumatique (100) faisant office d'épaulement externe, dans la direction axiale, lorsque le bandage pneumatique (100) est monté sur un véhicule en conformité avec la spécification du bandage pneumatique et dans lequel la deuxième zone (124) faisant office d'épaulement représente la zone du bandage pneumatique (100) faisant office d'épaulement interne, dans la direction axiale, lorsque le bandage pneumatique (100) est monté sur un véhicule en conformité avec la spécification du bandage pneumatique ; dans lequel chaque zone (122, 124) faisant office d'épaulement est réalisée à partir d'une bande à double couche (210) qui possède une première couche (212) réalisée à partir d'un premier composé et une deuxième couche (214) réalisée à partir d'un deuxième composé différent ; dans lequel la première zone (122) faisant office d'épaulement possède un rapport de bande dans une plage qui représente de 70 à 95 % du premier composé à une plage qui représente de 5 à 30 % du deuxième composé, **caractérisé en ce que** la deuxième zone (124) faisant office d'épaulement possède un rapport de bande dans une plage qui représente de 8 à 15 % du premier composé à une plage qui représente de 92 à 85 % du deuxième composé ; et dans lequel le premier composé possède une hystérèse d'au moins 20 % supérieure à celle du deuxième composé.

2. Bandage pneumatique selon la revendication 1, dans lequel la première zone (122) faisant office d'épaulement possède un rapport de bande d'une valeur de 75 à 85 %, de préférence de 80 %, du premier composé à une valeur de 15 à 25 %, de préférence de 20 %, du deuxième composé.

3. Bandage pneumatique selon au moins une des revendications précédentes, dans lequel la bande de roulement (100) est constituée à raison de 30 à 50 pour cent, de préférence de 35 à 45 pour cent ou de 40 % du premier composé et à raison de 50 à 70 pour cent, de préférence de 55 à 65 pour cent ou de 60 %, du deuxième composé.

4. Bandage pneumatique selon au moins une des revendications précédentes, dans lequel le premier composé est choisi pour sa traction sur terrain sec ou possède une traction sur terrain sec supérieure, de préférence une traction sur terrain sec supérieure à raison d'au moins 10 pour cent à celle du deuxième composé.

5. Bandage pneumatique selon au moins une des revendications précédentes, dans lequel le deuxième composé est choisi pour sa résistance au roulement ou possède une résistance au roulement inférieure, de préférence une résistance au roulement inférieure à raison d'au moins 10 pour cent à celle du premier composé.

6. Bandage pneumatique selon au moins une des revendications précédentes, dans lequel le premier composé possède un hystérèse supérieure à raison d'au moins 50 % à celle du deuxième composé.

7. Bandage pneumatique selon au moins une des revendications précédentes, dans lequel les bandes à doubles couches (210) se chevauchent.

8. Bandage pneumatique selon au moins une des revendications précédentes, dans lequel les bandes à doubles couches (210) sont appliquées en formant un angle qui se situe dans la plage de 0 à 60 degrés, de préférence de 1 à 10 degrés, par rapport à la direction circonférentielle du bandage pneumatique (100).

9. Bandage pneumatique selon au moins une des revendications précédentes, dans lequel une zone faisant office d'épaulement parmi lesdites première et deuxième zones (122, 124) faisant office d'épaulements ou les deux est/sont réalisée(s) à partir d'une première couche qui possède une configuration en coupe transversale au moins essentiellement de forme triangulaire (252) et d'une deuxième couche qui possède une configuration au moins essentiellement de forme polygonale (254).

10. Bandage pneumatique selon au moins une des revendications précédentes, dans lequel la bande à double couche (210) possède une épaisseur de bande dans la plage de 0,5 à 10 mm, de manière plus préférée dans la plage de 5 à 8 mm ou de 0,5 à 3 mm d'épaisseur, et/ou une largeur axiale dans la plage de 10 à 25 mm.
